# EUROPEAN PATENT SPECIFICATION

(11) **EP 0 873 713 B1**
(45) Date of publication and mention of the grant of the patent: **28.08.2002**
(21) Application number: 98830101.6
(22) Date of filing: 26.02.1998
(51) Int. Cl.: A47L 9/24, A47L 11/34, B29C 45/17

(54) **Method of manufacture of a modular rigid extension tube for floor, moquette, carpet and the like washing-sucking machines.**
Verfahren zur Herstellung eines modularen, starren Verlängerungsrohres für Sprüh- und Saugmaschinen zur Reinigung von Fussböden, Teppichen, Bodenbelägen und dgl.
Mèthode de fabrication d'un tuyau rigide modulaire prolongateur pour machines de nettoyage par liquide et aspiration pour le traitement des sols, tapis, moquettes, etc.

(30) Priority: 25.03.1997 IT MI970704
(43) Date of publication of application: 28.10.1998
(73) Proprietor: Tamborini, Giancarlo, 21100 Varese (IT); Tamborini, Ariberto, 21100 Varese (IT)
(72) Inventor: Tamborini, Giancarlo, 21100 Varese (IT); Tamborini, Ariberto, 21100 Varese (IT)
(74) Representative: Cicogna, Franco

(56) References cited:
- EP-A- 0 567 044
- EP-A- 0 723 760
- DE-A- 4 011 310
- US-A- 5 459 901
- "IN EINEM ZUG" PLASTVERARBEITER, vol. 48, no. 2, February 1997, page 32 XP000659992

## Description

### BACKGROUND OF THE INVENTION

The present invention relates to method for making a modular rigid thermoplastic material extension tube for floor, moquette, carpet and the like washing-sucking machines.

As is known, conventional washing-sucking machines comprise a lot of fittings which are coupled, by rigid extension tubes or pipes, to a flexible element, in turn connected to the machine for delivery a washing liquid and sucking the liquid being removed from the surface being cleaned.

Accordingly, prior extension tubes or pipes for the above mentioned application, usually comprise a suction duct and a delivery duct which must be coupled to the suction and delivery portions of the flexible tube.

Available extension tubes, however, involve great making difficulties, since the delivery tube and suction tube are practically made as separated elements which must be successively assembled in order to provide a single element to be tightly coupled to the adjoining element.

This making method involves a comparatively high cost for the extension tubes and great difficulties in quickly coupling to one another the extension tubes.

The document US-A-5 459 901 on which the preamble of the claim has been based, discloses a thermoplastic material tube including two tube elements integrally coupled to one another by a rib.

The document EP-A-0 723 760 discloses a tube body having coupling means for tightly coupling it to an extension tube.

### SUMMARY OF THE INVENTION

Accordingly, the aim of the present invention, is to provide a making method allowing to easily made extension tubes and specifically designed to drastically reduce all the constructional steps and cost therefor.

Within the scope of the above aim a main object of the present invention is to provide a method for making a modular rigid thermoplastic material extension tube for washing-sucking machines which has a very reduced cost and can be easily and quickly coupled to and/or disconnected from a like extension tube.

Another object of the present invention is to provide a method for making such a modular rigid extension tube which, owing to its constructional features, is very reliable and safe in operation.

According to one aspect of the present invention, the above mentioned aim and objects, as well as yet other objects, which will become more apparent hereinafter, are achieved by a method for making a modular rigid themoplastic material extension tube for washing-sucking machines according to the claim.

### BRIEF DESCRIPTION OF THE DRAWINGS

Further characteristics and advantages of the present invention will become more apparent hereinafter from the following detailed disclosure of a preferred, though not exclusive, embodiment thereof, reference being made to the accompanying drawings, where:
Figure 1 is a schematic view illustrating the starting molding step of the subject extension tube or pipe;
Figure 2 is a cross-sectional view, illustrating the starting operating step for making a delivery duct;

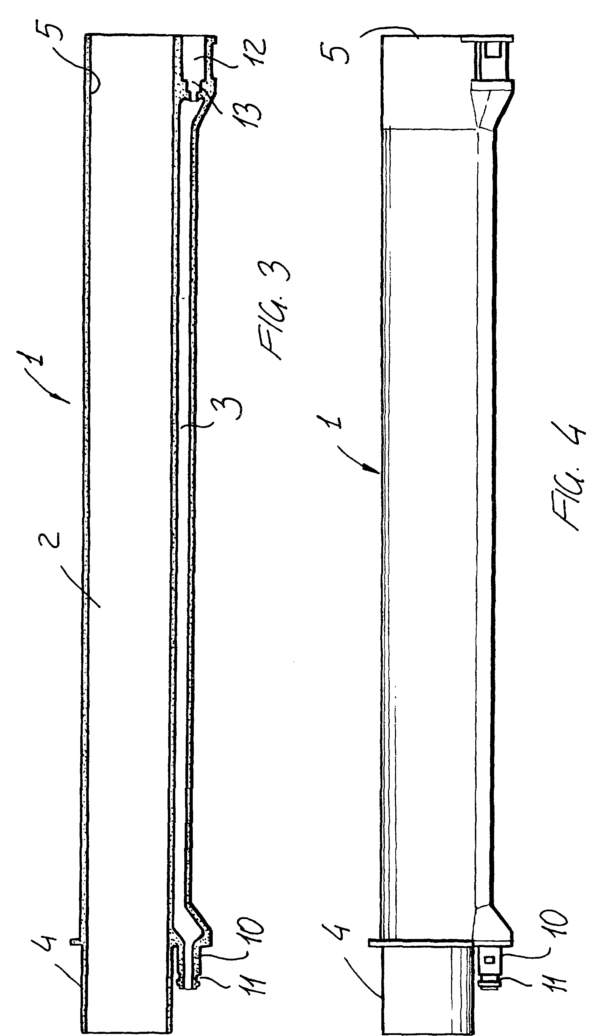

Figure 3 is a further schematic cross-sectional view illustrating the extension tube or pipe according to the present invention;
Figure 4 is an elevation view illustrating the extension tube according to the present invention;

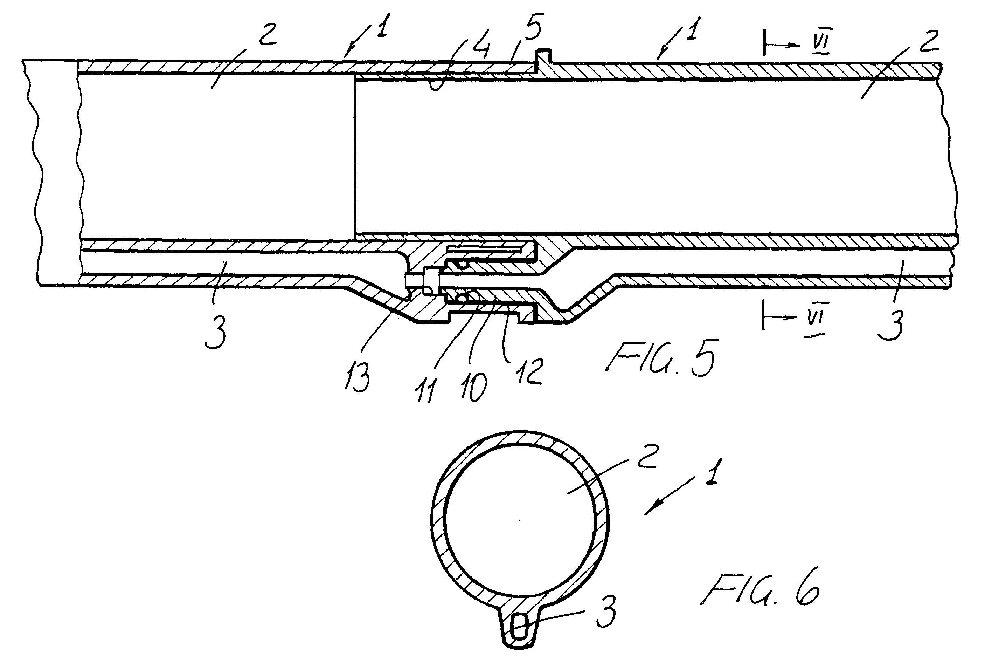

Figure 5 is a cross-sectional view illustrating a possible method for coupling two extension tubes according to the present invention;
Figure 6 is a cross-sectional view substantially taken along the section line VI-VI of Figure 5;

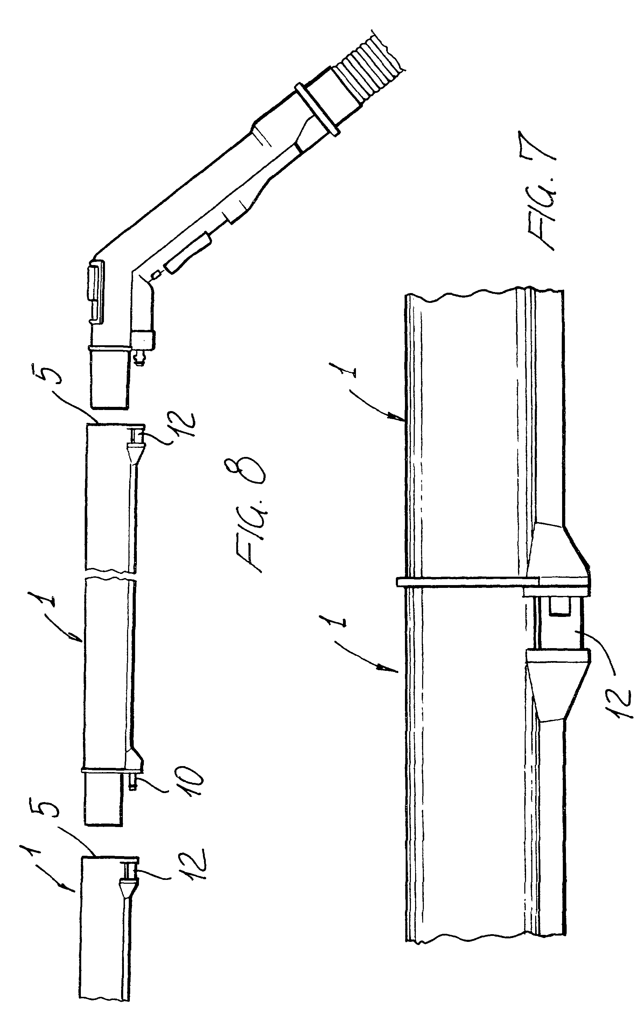

Figure 7 is a further schematic view illustrating a possible method for coupling two extension tubes;
   and
Figure 8 illustrates a possible method for coupling an extension tube and a lance element.

### DESCRIPTION OF THE PREFERRED EMBODIMENTS

With reference to the number references of the above mentioned figures, the modular rigid extension tube or pipe for washing-sucking machines, which has been specifically designed for cleaning floors, moquettes, carpets and the like, according to the present invention, and which has been generally indicated by the reference number 1, comprises a tube body made of a rigid plastic material, and defining in its inside a suction duct 2.

The suction duct 2 adjoins, with its outer surface, a delivery duct 3, the main feature of which is that it is made as a single piece with the inner suction duct 2.

At the end portions of the suction tube duct 2 and delivery duct 3, are provided tightly coupling means for tightly coupling said ducts with a like extension tube, said means comprising a tapering cylindrical portion 4, arranged at that end portion of the suction duct 2 engaged in a corresponding opposite end portion 5 of said duct.

The delivery duct 3 is provided, at the end portion of a male plug-in element, with a lug 10 provided with a groove 11 for engaging therein a sealing element, which can be plugged into a cylindrical seat or recess 12 provided with end tapering portions 13, to provide a perfectly stable connection.

The making method for making the extension tube or pipe 1 will be disclosed in a more detailed manner herein below.

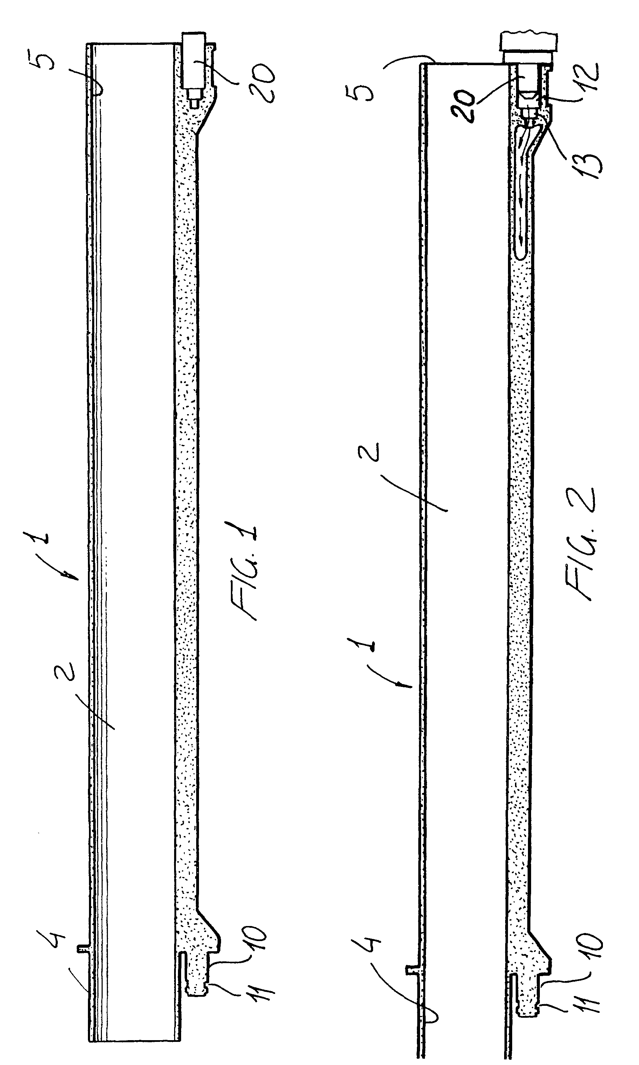

Actually to provide in a single-piece the suction duct 2 and delivery duct 3, without using very complex molds, the inventive method provides to mold a thermoplastic material, as shown in Figure 1, with an insert element 20 including a nozzle at the recess or seat 12.

Upon having molded the plastic material, a starting cooling step is performed, for causing the plastic material to set at the outer surface regions thereof and at the region delimiting the inner duct 2.

Contemporaneously, through the above mentioned insert element 20 nitrogen or other pressurized gas is injected in order to provide a vacuum at the region affected by the delivery channel, which region will be actually filled by a hot plastic material and, accordingly, in a molten condition.

The pressurized nitrogen or other suitable gas will allow to make the channel with a simultaneous ejecting of the plastic material from the lug 10 side, thereby providing a proper delivery channel which is made without using an inner mold or other complex molding methods, but by exploiting the fact that the plastic material, upon cooling, will assume a given surface consistency, thereby setting so as to provide the walls, whereas the inner part of said plastic material, still in a paste condition, will further flow to be upward ejected.

From the above disclosure it should be apparent that the invention fully achieves the intended aim and objects.

In particular, a rigid extension tube has been provided having a delivery duct and the suction duct made as a single-piece, thereby allowing to rigidly plug in several extension tubes.

Another very important aspect of the invention is that the disclosed making method provides a product having very good technological features, without the need of using complex molds.

The invention as disclosed is susceptible to several modifications and variations, all of which will come within the scope of the invention as defined by the appended claims.

## Claims

1. A method for making a modular rigid thermoplastic material extension tube (1) for washing-sucking machines, **characterized in that** said method comprises the steps of:
molding a thermoplastic material to provide a tube body (2, 3) defining a suction duct (2) and a portion radially projecting therefrom, which extends longitudinally, and where a delivery duct (3) will be formed, said radially projecting portion having a first end portion and a second end portion, said first end portion being formed with a lug element (10) having a free end portion; cooling, during said molding step, said tube body (1, 2) thereby allowing the outer parts thereof to cure; and
blowing in pressurized nitrogen or other gas, through a nozzle insert element (20), at said second end portion of said radially projecting portion thereby ejecting hot fluid plastic material at said free end portion of said lug element (10), thereby providing a delivery duct (3) adjoining said suction duct (2) and in a single piece therewith.

## Patentansprüche

1. Verfahren zur Herstellung eines modularen starren Verlängerungsrohres (1) aus thermoplastischem Material für Sprüh- und Saugmaschinen,
**dadurch gekennzeichnet, daß**
das Verfahren die folgenden Schritte umfaßt:
Gieß.en von thermoplastischem Material zur Bereitstellung eines Rohrkörpers (2,3), der eine Saugleitung (2) und einen radial von derselben hervorstehenden Abschnitt definiert, der sich in Längsrichtung erstreckt, wobei eine Versorgungsleitung (3) ausgebildet wird und der radial hervorstehende Abschnitt einen ersten Endabschnitt und einen zweiten Endabschnitt auf weist, der mit einem Ansatzelement (10) mit einem freien Endabschnitt ausgebildet ist; Kühlung während des Gießschrittes, wobei der Rohrkörper (1,2) dadurch das Härten . von seinen äußeren Teilen ermöglicht; und
Einblasen von druckbeaufschlagtem Stickstoff oder anderem Gas durch ein Düseneinsatzelement (20) an dem zweiten Endabschnitt des radial hervorstehenden Abschnittes, wodurch der Auswurf von heißem und flüssigem Kunststoffmaterial an dem freien Endabschnitt des Ansatzelementes (10) ermöglicht wird, wodurch eine an die Saugleitung (2) angrenzende, und mit derselben einstückig ausgebildete Versorgungsleitung (3) bereitgestellt wird.

## Revendications

1. Procédé de fabrication d'un tuyau rigide modulaire prolongateur en matériau thermoplastique (1) pour des machines de nettoyage par liquide et par aspiration, **caractérisé en ce que** ledit procédé comprend les étapes de:
moulage d'un matériau thermoplastique afin de foumir un corps de tube (2, 3) définissant un conduit d'aspiration (2) et une partie saillante radialement, qui s'étend de manière longitudinale, et où un conduit d'alimentation (3) sera formé, ladite partie saillante radialement présentant une première partie d'extrémité et une seconde partie d'extrémité, ladite première partie d'extrémité étant formée avec un élément de fixation (10) présentant une partie d'extrémité libre ; et de refroidissement durant ladite étape de moulage dudit corps de tube (1, 2), de ce fait permettant aux parties d'extrémités de celui-ci de se durcir ; et
soufflage de nitrogène pressurisé ou d'un autre gaz, à travers un élément encastré de type buse (20), fixé sur la seconde partie d'extrémité de ladite partie saillante radialement de ce fait éjectant un matériau plastique fluide, chaud vers ladite partie d'extrémité libre dudit élément de fixation (10), de ce fait fournissant un conduit d'alimentation (3) avoisinant ledit conduit d'aspiration (2) et en une seule pièce.
